# EUROPÄISCHE PATENTSCHRIFT

(11) **EP 2 977 359 B1**
(45) Veröffentlichungstag und Bekanntmachung des Hinweises auf die Patenterteilung: **19.10.2016**
(21) Anmeldenummer: 14177763.1
(22) Anmeldetag: 21.07.2014
(51) Int. Cl.: C03B 37/014, C03B 19/14, C03C 3/06

(54) **VERFAHREN ZUR HERSTELLUNG VON MIT FLUOR DOTIERTEM QUARZGLAS**
METHOD FOR PRODUCING FLUORINE DOPED QUARTZ GLASS
PROCÉDÉ DE FABRICATION DE VERRE DE QUARTZ DOPÉ PAR LE FLUOR

(43) Veröffentlichungstag der Anmeldung: 27.01.2016
(73) Patentinhaber: Heraeus Quarzglas GmbH & Co. KG, 63450 Hanau (DE)
(72) Erfinder: Schwerin, Malte, 06116 Halle a.d. Saale (DE); Trommer, Dr. Martin, 06749 Bitterfeld (DE); Zwarg, Steffen, 06766 Wolfen (DE)
(74) Vertreter: Heraeus IP

(56) Entgegenhaltungen:
- WO-A1-03/101900
- DE-A1-102005 059 290
- DE-B3-102012 007 520
- DE-C1- 10 157 306
- DE-C1- 10 218 864
- JP-A- 2006 199 517
- US-A1- 2014 161 406

## Beschreibung

Die vorliegende Erfindung betrifft ein Verfahren zur Herstellung von dotiertem Quarzglas.

Durch das Einbringen von Fremdatomen in das Quarzglas, lassen sich dessen physikalische Eigenschaften beeinflussen. So führt beispielsweise das Dotieren von Quarzglas mit Fluor zu einer Absenkung des Brechungsindexes. Fluordotiertes Quarzglas wird daher unter anderem zur Herstellung lichtleitender Brechzahlstrukturen in optischen Fasern verwendet, zum Beispiel biegeunempfindliche Fasern oder in sogenannten "ultra low loss Fasern". Dabei steht dem Fachmann eine Reihe von Verfahren zur Verfügung. So kann beispielsweise als Halbzeug für derartige optische Fasern entweder eine Vorform eingesetzt werden, die in radialer Richtung ein Brechzahlprofil aufweist und die unmittelbar zu der gewünschten Faser gezogen werden kann. Alternativ kann ein stab- oder rohrförmiger Zylinder, der mindestens eine Schicht aus fluordotiertem Quarzglas aufweist, verwendet werden. Dieser kann zusammen mit anderen zylinderförmigen Bauteilen als Ensemble in koaxialer Anordnung zu der Faser elongiert werden. Weiterhin finden derartige mit Fluor dotierte Quarzglas-Zylinder in der Laser- und Halbleiterfertigung Anwendung.

In der Regel handelt es sich bei den Dotierstoffen um Seltene Erden wie Yttrium und um Übergangsmetalle wie Aluminium oder Titan, die eine möglichst hohe Verstärkerleistung erzielen sollen. Allerdings sind die Menge an Fremdionen, die in das Quarzglas eingebracht werden können, begrenzt, da sich durch die Anwesenheit der Dotierstoffe im Quarzglas dessen Brechungsindex verändert, was zu unerwünschten Nebeneffekten führen kann. Um diesen Nachteilen entgegenzuwirken, wird das Quarzglas zusätzlich mit Fluor dotiert, von dem bekannt ist, dass es den Brechungsindex von Quarzglas senkt. Allerdings finden sich auch hier herstellungsbedingte Einschränkungen, durch die die Menge an Fluor, die in das Quarzglas eingebracht werden kann, begrenzt wird und eine homogene Verteilung, insbesondere bei hohen Wandstärken, nur schwer zu erreichen ist.

Weiterhin erschwert wird das Einbringen von Fremdatomen durch im Sootkörper befindliche Hydroxylgruppen (OH-Gruppen), die während des Herstellungsverfahrens, beispielsweise durch verschiedene Trocknungsschritte, entfernt werden müssen. Hierbei stellt sich wiederum das Problem, dass diese mit den Dotierverfahren kompatibel sein müssen. Im Stand der Technik sind verschiedene Lösungsansätze beschrieben.

DE 102 18 864 C1 beschreibt ein Verfahren zur Herstellung eines zylinderförmigen Quarzglaskörpers mit geringem OH-Gehalt, bei dem der Sootkörper einer Dehydratationsbehandlung unterzogen wird.

DE 101 57 306 C1 offenbart ein Verfahren zur Herstellung eines dotierten Quarzglases, in dem der Sootkörper in einer fluorhaltigen Atmosphäre behandelt wird.

DE 10 2012 007 520 B3 offenbart ein Verfahren zur Herstellung eines synthetischen Quarzglases mit sämtlichen Merkmalen des Oberbegriffes des Anspruchs 1 der vorliegenden Erfindung.

WO 03/101900 A1 offenbart ein Verfahren zur Herstellung einer dotierten optischen Faservorform, in dem der Sootkörper zunächst in einer chlorhaltigen Atmosphäre behandelt wird und in einem anschließenden Schritt einem fluorhaltigen Gas ausgesetzt wird.

EP 0 161 680 beschreibt ein Verfahren zur Herstellung einer Glasvorform für eine optische Faser, bei dem die Glasvorform aus feinen Glasteilchen enthaltend SiO₂ gebildet wird und anschließend in einer Atmosphäre aus He und SiF₄ gesintert wird.

DE 10 2005 059 290 A1 befasst sich mit einem Verfahren zur Herstellung eines zylinderförmigen Formkörpers aus transparentem Quarzglas durch schichtweises Abscheiden von SiO₂-Partikeln auf einen Träger unter Ausbildung eines porösen Sootkörpers. Dieser Sootkörper wird dann einer Unterdruck-Sinterbehandlung unterzogen.

EP 0 139 532 B1 beschreibt ein Verfahren zur Herstellung einer Vorform aus Glas für optische Fasern durch Erhitzen einer rußartigen Glas-Vorform in Gegenwart eines fluorhaltigen Gases.

Es hat sich als vorteilhaft erwiesen, die Verglasung des Sootkörpers unter vermindertem Druck durchzuführen. Auf diese Weise erfolgt während des Sinterprozesses eine gleichzeitige Dehydrierung des Sootkörpers und etwaige Einschlüsse werden vermieden. Zudem wird die Blasenbildung im späteren Quarzglas minimiert. Dieses Verfahren hat allerdings den Nachteil, dass im Sootkörper physikalisch gebundene Dotierstoffe, insbesondere gasförmige Fluorverbindungen, während des Verglasungsprozesses, insbesondere in den äußeren Schichten, teilweise desorbieren können. Die Folge ist die Ausbildung eines unerwünschten Konzentrationsgradienten und eine Verarmung an Fluor.

Eine Möglichkeit, der Verarmung an Fluor insbesondere in den äußeren Schichten des Sootkörper entgegenzuwirken, ist das Verglasen in einer fluorhaltigen Atmosphäre. Dadurch wird sichergestellt, dass während der Verglasung weiterhin ein ausreichend hoher Partialdruck an fluorhaltigen Verbindungen, wie beispielsweise SiF₄ oder HF, in der Gasphase vorliegen, so dass während der Verglasung kein Abbau von Fluor im Sootkörper stattfindet. Die herkömmlichen Verfahren haben allerdings den Nachteil, dass an die Ofenmaterialien, in denen die Verglasung in Gegenwart eines fluorhaltigen Gases durchgeführt wird, hohe Anforderungen gestellt werden. Durch die Anwesenheit hochreaktiver Medien wie SiF₄ oder Folgeprodukte wie HF, in Kombination mit der hohen Prozesstemperatur sind die Ofenmaterialen extremen Bedingungen ausgesetzt. Dies verursacht einen hohen Verschleiß, was wiederum hohe Wartungs- und Instandhaltungskosten nach sich zieht. Zusätzlich beschränken die extremen Anforderungen auch die Chargengröße, da mit zunehmender Ofengröße die Anforderungen und Belastungen des Ofenmaterials zunehmen. Weiterhin ist die Auswahl der Ofenmaterialien sehr beschränkt, da diese neben den hohen Temperaturen und der Korrosionsbeständigkeit auch eine hohe Reinheit aufweisen müssen. Typische Ofenmaterialien, in denen unter aggressiver Atmosphäre verglast werden kann, sind z.B. Inliner-Rohre aus Quarzglas, die allerdings den Nachteil haben, dass sie sich mit der Zeit verformen. Je höher die Verglasungstemperatur ist, desto größer ist auch der Verschleiß der Materialien.

Weiterhin besteht beim Verglasen unter Gasatmosphäre das erhöhte Risiko, Blasen im Glas einzubauen, was sich negativ auf die optischen Eigenschaften des Quarzglases auswirkt.

Es besteht daher der Bedarf nach einem Prozess, der das Verglasen von mit Fluor dotierten Sootkörpern im Vakuum erlaubt, ohne dass es zur Ausbildung eines Konzentrationsgradienten des Dotanden kommt. Vielmehr soll eine hohe und homogene Fluordotierung erreicht werden.

Aufgabe der vorliegenden Erfindung ist daher das Bereitstellen eines Prozesses, der die Herstellung von mit Fluor dotiertem Quarzglas erlaubt, das einen hohen Fluorgehalt und eine homogene Verteilung des Dotanden aufweist, unter Nutzung der Vorteile des Vakuumsinterns. Weiterhin ist es Aufgabe der vorliegenden Erfindung ein Verfahren zur Herstellung von mit Fluor dotiertem Quarzglas bereitzustellen, wobei das Quarzglas einen hohen Gehalt an Fluor bei gleichzeitig geringer Blasigkeit aufweist.

Die Aufgabe wird erfindungsgemäß durch das Bereitstellen eines Verfahrens zum Herstellen von dotiertem Quarzglas mit einem hohem Fluorgehalt, beispielsweise > 10000ppm, gelöst, wobei Fluorierung und nachfolgende Verglasung in unterschiedlichen Öfen stattfinden und es sich bei dem Verglasungsprozess um eine Vakuumverglasung handelt.

Ein Objekt der vorliegenden Erfindung ist daher ein Verfahren zur Herstellung von dotiertem Quarzglas, umfassend die folgenden Schritte:
a) Bereitstellen eines Sootkörpers, wobei der Sootkörper eine mittlere Dichte in einem Bereich von 18 bis 30%, bezogen auf die relative Dichte von Quarzglas, aufweist;
b) Behandeln des Sootkörpers mit einem Gas umfassend eine fluorhaltige Verbindung in einer Prozesskammer unter Ausbildung eines fluorierten Zwischenproduktes (A), wobei sich die mittlere Dichte des Zwischenprodukts (A) um maximal 30% erhöht, bezogen auf die mittlere Dichte des Sootkörpers in Schritt a);
c) Erhitzen des fluorierten Zwischenproduktes (A) auf eine Temperatur in einem Bereich von 950 bis 1150 °C unter Ausbildung eines fluorierten Zwischenproduktes (B), wobei die mittlere Dichte des fluorierten Zwischenproduktes (B) maximal 80%, vorzugsweise maximal 60% der relativen Dichte von Quarzglas beträgt; und
d) Verglasen des fluorierten Zwischenprodukts (B) in einer Prozesskammer, wobei der Druck innerhalb der Prozesskammer geringer ist als der Druck außerhalb der Prozesskammer, unter Ausbildung des dotierten Quarzglases.

Ein Sootkörper im Rahmen der vorliegenden Erfindung ist ein poröser Rohling, der durch das Abscheiden von SiO₂-Partikel auf einem Träger gewonnen wird und der durch Verglasen in das endgültige Quarzglas überführt wird. Im Allgemeinen ist die Struktur des SiO₂-Sootkörpers ausreichend gasdurchlässig, was eine gleichmäßige Gasphasenbehandlung oder Sinterung erlaubt. Im Bereich von Schichten mit einer höheren Dichte ist dies nur eingeschränkt möglich, da dieses Schichten Diffusionsbarrieren darstellen, die bei Trocknungs- und Sinterungsprozessen ein ungleichmäßiges Behandlungsergebnis verursachen können. Diese Problematik stellt sich wegen langer Diffusionswege insbesondere bei großvolumigen SiO₂-Sootkörpern mit hohen Wandstärken.

Für die Herstellung derartiger Sootkörper steht dem Fachmann eine Vielzahl von Verfahren zur Verfügung. Als Beispiele seien die sogenannten CVD-Prozesse genannt, insbesondere das OVD- und das VAD-Verfahren. Beim OVD-Verfahren (Outside Vapor Deposition) werden SiO₂-Partikel auf einer Zylindermanteloberfläche eines länglichen Trägers abgeschieden, der um seine Längsachse rotiert. Dabei kann der Träger beispielsweise aus Keramik, Graphit oder Quarzglas bestehen. Beim VAD-Verfahren (Vapor Axial Deposition) werden die SiO₂-Partikel auf einem scheibenförmigen rotierenden Träger in Richtung der Sootkörper-Längsachse aufgebaut. In beiden Verfahren können die SiO₂-Partikel beispielsweise durch Flammenhydrolyse von SiCl₄ in einer Knallgasflamme gebildet werden und schichtweise auf dem Träger unter Bildung des Sootkörpers abgeschieden werden.

### Verfahrensschritt a)

Der in Schritt a) des erfindungsgemäßen Verfahrens bereitgestellte Sootkörper hat eine mittlere Dichte in einem Bereich von 18 bis 30%, bezogen auf die relative Dichte von Quarzglas. Dabei wird eine Dichte von Quarzglas von 2,21 g/cm³ zugrunde gelegt. Die erzielte Dichte ist unter anderem abhängig vom Abstand der Brenner zu der Ablagerungsfläche, der eingestellten Temperatur, der Stöchiometrie der Gase sowie der Geometrie der Brenner. Entsprechende Einstellungen sind dem Fachmann wohl bekannt. Die Dichte des Sootkörpers kann mit bekannten Verfahren bestimmt werden. Beispielsweise kann die lokale Dichte des Sootkörpers mittels computertomographischer Verfahren bestimmt werden, indem Schnittaufnahmen des Sootkörpers erstellt werden. Die mittlere Dichte ergibt sich dann aus der Mittelung über alle Messpunkte.

Besonders bevorzugt ist eine Ausführungsform des erfindungsgemäßen Verfahrens, in dem der Sootkörper eine spezifische Oberfläche nach BET von 7 bis 16 m²/g, vorzugsweise 10 bis 15 m²/g aufweist, bestimmt gemäß DIN-ISO 9277:2003-5.

Der Sootköper in Schritt a) kann vor der Behandlung mit einem eine fluorhaltige Verbindung umfassenden Gases getrocknet werden, um eventuell im Sootkörper befindliche Verunreinigungen, wie beispielsweise Hydroxidgruppen (OH-Gruppen) zu entfernen. Dabei kann die Trocknung thermisch und/oder chemisch erfolgen. Besonders bevorzugt ist eine Ausführungsform, in der der Sootkörper in Schritt a) bei einer Temperatur in einem Bereich von 700 bis 1100 °C thermisch und/oder chemisch getrocknet wird.

Weiterhin bevorzugt wird die chemische Trocknung des Sootkörpers in Gegenwart einer chlorhaltigen Verbindung durchgeführt. Besonders bevorzugt ist Verwendung von Chlor (Cl₂).

Das thermische Trocknen des Sootkörpers wird vorzugsweise in Gegenwart eines oder mehrerer Inertgase durchgeführt. Auf diese Weise wird verhindert, dass bereits gereinigte Bereiche des Sootkörpers erneut kontaminiert werden. Vorzugsweise ist das Inertgas ausgewählt aus der Gruppe bestehend aus He, Ar, N₂ sowie Mischungen davon.

Besonders bevorzugt ist eine Ausführungsform, in der der Sootkörper in Schritt a) zuerst in Gegenwart eines Inertgases und dann in Gegenwart einer chlorhaltigen Verbindung getrocknet wird, wobei die Temperatur jeweils in einem Bereich von 700 bis 1000 °C liegt.

### Verfahrensschritt b)

Die Dotierung des Sootkörpers erfolgt in Schritt b) des erfindungsgemäßen Verfahrens durch Behandlung des Sootkörpers mit einem Gas, das eine fluorhaltige Verbindung umfasst. Dabei kann es sich bei der fluorhaltigen Verbindung auch um eine Mischung aus mehreren fluorhaltigen Verbindungen handeln. In einer bevorzugten Ausführungsform ist die fluorhaltige Verbindung ausgewählt aus der Gruppe bestehend aus F₂, SiF₄, CF₄, C₂F₆, SF₆, C₃F₈, NF₃, ClF₃, BF₃, Fluor-Chlor-Kohlenstoffe sowie Gemische hiervon. In einer besonders bevorzugten Ausführungsform ist die fluorhaltige Verbindung ausgewählt aus der Gruppe bestehend aus F₂, SiF₄, CF₄, C₂F₆, SF₆ und NF₃.

Eine besonders homogene Verteilung des Dotierstoffs in dem Sootkörper konnte erreicht werden, wenn das Gas mindestens 15 Vol.-% der fluorhaltigen Verbindung umfasste, bezogen auf das Gesamtvolumen des Gases. Daher ist eine Ausführungsform des Verfahrens bevorzugt, in der der Anteil der fluorhaltigen Verbindung an dem Gas 15 bis 100 Vol.-%, vorzugsweise 60 bis 100 Vol.-%, jeweils bezogen auf das Gesamtvolumen des Gases, beträgt. Die Menge an fluorhaltiger Verbindung kann dabei je nach Art der fluorhaltigen Verbindung variieren. So ist beispielsweise für den Fall, dass CF₄ und/oder C₂F₆ als fluorhaltige Verbindung verwendet werden, ein Anteil von 15 bis 50 Vol.-% der fluorhaltigen Verbindung an dem Gas, bezogen auf das Gesamtvolumen des Gases, bevorzugt. Weiterhin kann der Anteil der fluorhaltigen Verbindung an dem Gas, das zur Behandlung des Sootkörpers eingesetzt wird, von der Menge an Dotierstoff, die in den Sootkörper eingebracht werden soll sowie von gewählten Reaktionsbedingungen beeinflusst werden.

Als besonders vorteilhaft hat es sich erwiesen, wenn die Behandlung des Sootkörpers in Schritt b) des erfindungsgemäßen Verfahrens bei erhöhter Temperatur durchgeführt wird. Auf diese Weise lassen sich eine homogene Verteilung des Dotierstoffs sowie ein geringer Grad an unerwünschten Verunreinigungen erreichen. Daher ist eine Ausführungsform bevorzugt, bei der die Behandlung des Sootkörpers in Schritt b) bei einer Temperatur in einem Bereich von 700 bis 1100 °C erfolgt. Die Temperatur bzw. der Temperaturbereich, in dem die Behandlung erfolgt, sollte dabei unter Berücksichtigung der eingesetzten fluorhaltigen Verbindung gewählt werden. Für den Fall, dass SiF₄ als fluorhaltige Verbindung eingesetzt wird, liegt die Temperatur vorzugsweise in einem Bereich von 800 bis 900 °C. Dagegen hat es sich als vorteilhaft erweisen, wenn die Behandlung des Sootkörpers mit CF₄ als fluorhaltige Verbindung vorzugsweise bei einer Temperatur in einem Bereich von 950 bis 1100 °C durchgeführt. Dabei sollte man sich im Klaren darüber sein, dass die angegeben Temperaturen als Richtwerte zu verstehen sind und je nach Art der Durchführung und der Prozesskammer variieren können.

### Verfahrensschritt c)

Nach der Behandlung des Sootkörpers in einer fluorhaltigen Atmosphäre wird das so gewonnene, fluorierte Zwischenprodukt (A) auf eine Temperatur in einem Bereich von 950 bis 1150 °C unter Ausbildung eines fluorierten Zwischenproduktes (B) erhitzt. Bei dieser Behandlung kommt es zu einer Kompaktierung des fluorierten Zwischenproduktes (A), so dass die mittlere Dichte des resultierenden fluorierten Zwischenproduktes (B) maximal 80%, vorzugsweise maximal 60% der relativen Dichte von Quarzglas beträgt. In einer besonders bevorzugten Ausführungsform beträgt die mittlere Dichte des fluorierten Zwischenproduktes (B) 40 bis 80%, vorzugsweise 50 bis 60%, der relativen Dichte von Quarzglas. Die Temperatur, auf die das fluorierte Zwischenprodukt (A) erhitzt wird, hängt vom gewünschten Kompaktierungsgrad sowie der verwendeten fluorhaltigen Verbindung ab. Auf diese Weise wird erreicht, dass das eingebrachte Fluor in der SiO₂-Matrix des fluorierten Zwischenproduktes (B) fixiert wird, während gleichzeitig aber noch nicht alle Poren verschlossen sind. Dadurch wird ein Gasaustausch ermöglicht und beispielsweise noch vorhandende Verunreinigungen oder mögliche Gaseinschlüsse können entfernt werden. Als besonders vorteilhaft hat es sich erwiesen, wenn das fluorierte Zwischenprodukt (A) in Schritt c) des erfindungsgemäßen Verfahrens auf eine Temperatur erhitzt wird, die mindestens 100 °C niedriger ist, als die spätere Verglasungstemperatur. Daher ist eine Ausführungsform bevorzugt, in der die Temperatur in Schritt c) mindestens 100 °C, vorzugsweise 150 °C, unterhalb der Verglasungstemperatur des fluorierten Zwischenproduktes (B) liegt.

Weiterhin hat es sich als vorteilhaft erwiesen, die Trocknung des fluorierten Zwischenproduktes (B) in einer chlorhaltigen Atmosphäre vorzunehmen. Dadurch kommt es zu einer Substitution der OH-Gruppen im Zwischenprodukt durch Chlor, was in der späteren Faser zu einer Verringerung der Dämpfung führt. Daher ist eine Ausführungsform bevorzugt, bei der das fluorierte Zwischenprodukt (B) in einer chlorhaltigen Atmosphäre getrocknet wird, wobei die Trocknung bevorzugt bei einer Temperatur in einem Bereich von 700 bis 1100 °C erfolgt. Besonders bevorzugt umfasst die chlorhaltige Atmosphäre eine chlorhaltige Verbindung, vorzugsweise Cl₂. Weiterhin bevorzugt ist eine Ausführungsform, in der der Anteil der chlorhaltigen Verbindung 5 bis 60 Vol.-%, bezogen auf das Gesamtvolumen des Gases, beträgt.

### Verfahrensschritt d)

In einem abschließenden Schritt d) des erfindungsgemäßen Verfahrens wird das fluorierte Zwischenprodukt (B) verglast, wobei der Druck innerhalb der Prozesskammer, in der die Verglasung erfolgt, geringer ist als der Druck außerhalb der Prozesskammer. Vorzugsweise liegt die Verglasungstemperatur in Schritt d) in einem Bereich von 1200 bis 1500 °C, vorzugsweise 1250 bis 1350 °C. Um Blasenbildung im späteren Quarzglas zu vermeiden hat es sich als vorteilhaft erwiesen, wenn während der Verglasung der Druck innerhalb der Prozesskammer geringer ist als außerhalb der Prozesskammer, d.h. die Verglasung bei vermindertem Druck durchgeführt wird. Dies hat weiterhin den Vorteil, dass das Material der Prozesskammer nicht durch aggressive und korrosive Gase angegriffen wird und daher einem verringerten Verschleiß unterliegt. Daher ist eine Ausführungsform bevorzugt, in der das Verglasen in Schritt d) vorzugsweise bei einem Druck von weniger als 1 mbar erfolgt. Folglich sollte der Druck innerhalb der Prozesskammer vorzugsweise weniger als 1 mbar betragen.

Um den Herstellungsprozess des Quarzglases zu optimieren und die Materialien, insbesondere der Prozesskammer, zu schonen, hat es sich als vorteilhaft erwiesen, wenn die Dotierung des Sootkörpers und die Verglasung des fluorierten Zwischenproduktes in unterschiedlichen Prozesskammern erfolgen. Daher erfolgt gemäß erfindungsgemäßen Verfahren die Verglasung in Schritt d) in einer zweiten Prozesskammer, die sich von der ersten Prozesskammer unterscheided. Auf diese Weise kann jede der Prozesskammern für die entsprechenden Prozessschritte optimiert werden und eine übermäßige Belastung der Materialien, beispielsweise durch aggressive und korrosive Gase bei hohen Temperaturen, wird vermieden. Daher ist eine Ausführungsform bevorzugt, in der das Verglasen in Schritt d) in einer zweiten Prozesskammer erfolgt, die sich von der ersten Prozesskammer, in der die Schritte b) und c) durchgeführt werden, unterscheidet. Dabei kann es sich bei der zweiten Prozesskammer beispielsweise um einen Zonenofen handeln, in dem die Verglasung des fluorierten Zwischenproduktes (B) zonenweise erfolgt. Vorzugsweise wird die zweite Prozesskammer nicht mit fluorhaltigen Gasen beaufschlagt.

Weiterhin bevorzugt handelt es sich bei der zweiten Prozesskammer um einen Verglasungsofen, vorzugsweise um einen Zonensinterofen. Derartige Öfen sind dem Fachmann bekannt und können entsprechend den jeweiligen Anforderungen an die Größe und Form des Sootkörpers im erfindungsgemäßen Verfahren eingesetzt werden.

In einer bevorzugten Ausführungsform erfolgen die Verfahrensschritte b) und c) in einem isothermen Ofen mit Quarzglas-Prozessrohr. Entsprechende Öfen sind dem Fachmann aus dem Stand der Technik bekannt.

Beim Transport des fluorierten Zwischenproduktes (B) von der ersten Prozesskammer in die zweite Prozesskammer kann es infolge des Wassergehalts der Atmosphäre zu einer Eindiffusion von H₂O und infolge davon zu einer Kontamination mit OH-Gruppen und damit einhergehend zu einer axial und radial inhomogenen Verteilung der OH-Gruppenkonzentration in dem späteren Quarzglas kommen. Weiterhin hat die Anwesenheit der OH-Gruppen im fluorierten Zwischenprodukt (B) den Nachteil, dass diese im Bereich der üblichen Arbeitswellenlängen optischer Fasern eine hohe Absorption zeigen und daher die Qualität des späteren Produkts negativ beeinflussen. Um die OH-Konzentration im fluorierten Zwischenprodukt (B) zu senken, hat es sich daher als vorteilhaft erwiesen, wenn das fluorierte Zwischenprodukt (B) vor der Verglasung einem Trocknungsschritt unterzogen wird.

Daher ist eine Ausführungsform bevorzugt, in der das fluorierte Zwischenprodukt (B) in der zweiten Prozesskammer vor der Verglasung einem weiteren Trocknungsschritt unterzogen wird, wobei das Trocknen bei einer Temperatur in einem Bereich von 700 bis 1200 °C erfolgt. Es hat sich gezeigt, dass auf diese Weise Dekontaminationen beseitigt werden können. Durch das Erhitzen des fluorierten Zwischenproduktes (B) auf eine Temperatur oberhalb von 700 °C werden OH-Gruppen freigesetzt, die infolge der Porosität des Zwischenproduktes vor der Erhitzungsfront wandern und das Zwischenprodukt verlassen. Damit bereits gereinigte Bereiche des Zwischenproduktes nicht von Neuem mit freigesetztem Wasser reagieren, können diese durch eine Spülung mit Intertgas oder durch Absaugen entfernt werden. Diese Maßnahmen können in der zweiten Prozesskammer durchgeführt werden, so dass ein aufwendiger Umbau vermieden wird. Um eine neuerliche Kontamination zu verhindern, hat es sich als vorteilhaft erwiesen, wenn der Druck während des Trocknungsschritts innerhalb der zweiten Prozesskammer geringer ist als außerhalb der zweiten Prozesskammer. Besonders bevorzugt ist daher eine Ausführungsform, bei der der Druck während des Trocknungsschritts in der zweiten Prozesskammer weniger als 1 mbar beträgt.

In einer besonders bevorzugten Ausführungsform umfasst das erfindungsgemäße Verfahren die folgenden Schritte:
a) Bereitstellen eines Sootkörpers, wobei der Sootkörper eine mittlere Dichte in einem Bereich von 18 bis 30%, bezogen auf die relative Dichte von Quarzglas, aufweist;
   a-1) Trocknen des Sootkörpers bei einer Temperatur in einem Bereich von 700 bis 1050 °C;
   a-2) Optional chemisches Trocknen des Sootkörpers bei einer Temperatur in einem Bereich von 700 bis 1050 °C in Gegenwart eines chlorhaltigen Gases;
b) Behandeln des Sootkörpers mit einem Gas umfassend eine fluorhaltige Verbindung in einer ersten Prozesskammer unter Ausbildung eines fluorierten Zwischenproduktes (A), wobei sich die mittlere Dichte des fluorierten Zwischenproduktes (A) um maximal 30% erhöht, bezogen auf die mittlere Dichte des Sootkörpers in Schritt a);
c) Erhitzen des fluorierten Zwischenproduktes (A) auf eine Temperatur in einem Bereich von 950 bis 1150 °C unter Ausbildung eines fluorierten Zwischenproduktes (B), wobei die mittlere Dichte des fluorierten Zwischenproduktes (B) maximal 80%, vorzugsweise maximal 60%, der relativen Dichte von Quarzglas beträgt;
   c-1) Optional chemisches Trocknen des fluorierten Zwischenproduktes (B) bei einer Temperatur in einem Bereich von 700 bis 1100 °C in Gegenwart eines chlorhaltigen Gases;
   c-2) Umsetzen fluorierten Zwischenproduktes (B) in eine zweite Prozesskammer;
   c-3) Optional erhitzen des fluorierten Zwischenproduktes (B) auf eine Temperatur oberhalb von 1000 °C, vorzugsweise 1000 bis 1200 °C, wobei der Druck innerhalb der Prozesskammer vorzugsweise geringer ist als außerhalb der Prozesskammer; und
d) Verglasen des fluorierten Zwischenproduktes (B) in der zweiten Prozesskammer, wobei der Druck innerhalb der Prozesskammer geringer ist als außerhalb der Prozesskammer, unter Ausbildung des dotierten Quarzglases.

Vorzugsweise ist der Druck während des Erhitzens in Schritt c-3) innerhalb der Prozesskammer geringer als außerhalb der Prozesskammer.

Ein gemäß dem erfindungsgemäßen Verfahren erhältliches Quarzglas zeichnet sich durch eine homogene Dotierung mit Fluor, auch bei hohen Fluorgehalten und eine geringe Blasigkeit aus.

Die Eigenschaften des Quarzglases, wie beispielsweise Brechzahl und Absorptionsmaxima, können durch die Anwesenheit ausgewählter Fremdatome im Quarzglas beeinflusst werden. Daher ist eine Ausführungsform bevorzugt, in der das Quarzglas neben Fluor weitere Dotanden aufweist, wobei der Dotierstoff vorzugsweise ausgewählt ist aus der Gruppe bestehend aus Al₂O₃, Yb₂O₃, Er₂O₃, NbO₂, TiO₂, Ce₂O₃, Y₂O₃ sowie Mischungen davon.

Wie dem Fachmann bekannt ist, kann die Brechzahl von Quarzglas durch das gezielte Dotieren mit Fluor eingestellt werden. Allerdings sieht sich der Fachmann dabei häufig vor das Problem gestellt, dass die Menge an Fluor, die im Quarzglas vorhanden ist, durch den Herstellungsprozess begrenzt ist, da beispielsweise das Fluor durch entsprechende Verfahrensschritte wie Trocknen und Verglasen im Vakuum wieder aus dem Sootkörper ausgetragen wird. Das Quarzglas zeichnet sich dagegen durch einen hohen Gehalt an Fluor sowie eine homogene Verteilung desselben im Quarzglas aus. So beträgt der Fluorgehalt im Quarzglas in einer bevorzugten Ausführungsform 5.000 bis 20.000 ppm, vorzugsweise 8.000 bis 18.000 ppm, jeweils bezogen auf Gewichtsanteile.

Quarzglas, insbesondere dotiertes Quarzglas, findet eine breite Anwendung in der Optik und Analytik. Daher kann ein durch das erfindungsgemäße Verfahren hergestelltes Quarzglas als optisches Bauteil, optische Faserform oder als Teil einer optischen Faser verwendet werden.

Die vorliegende Erfindung wird im Folgenden anhand der Beispiele näher erläutert, wobei diese jedoch nicht als Einschränkung des Erfindungsgedanken zu verstehen sind.

### Beispiele:

| | Beispiel 1 | Beispiel 2 | Beispiel 3 | Vgl.-Bsp. |
|---|---|---|---|---|
| **Sootkörper** | | | | |
| BET (m²/g) | 11 | 16 | 9 | 13 |
| mittlere Dichte (%) | 28,1 | 26,2 | 28,8 | 27,5 |

| **Trocknen** | | | | |
|---|---|---|---|---|
| Temp. (°C) | 800 | 800 | 900 | 800 |
| N₂-Konz. (%) | 100 | 100 | 100 | 100 |
| Zeit (h) | 15 | 15 | 15 | 15 |

| **Fluorierung** | | | | |
|---|---|---|---|---|
| SiF₄-Konz. (%) | 50 | 50 | 100 | 50 |
| N₂-Konz. (%) | 50 | 50 | 0 | 50 |
| Temp. (°C) | 800 | 800 | 900 | 800 |
| Zeit (h) | 8 | 8 | 8 | 8 |

| **Vorsintern** | | | | |
|---|---|---|---|---|
| SiF₄-Konz. (%) | 0 | 0 | 0 | - |
| N₂-Konz. (%) | 100 | 100 | 100 | - |
| Temp. (°C) | 1000 | 1000 | 1100 | - |
| Zeit (h) | 8 | 4 | 8 | - |

| **Chem. Trocknen** | | | | |
|---|---|---|---|---|
| Temp. (°C) | - | 1000 | - | 800 |
| N₂-Konz. (%) | - | 80 | - | 80 |
| Cl₂-Konz. (%) | - | 20 | - | 20 |
| Zeit (h) | - | 4 | - | 8 |
| BET (m²/g) | 7 | 9 | 5 | 11 |
| mittlere Dichte (%) | 50 | 55 | 80 | 29 |

| **Sintern** | | | | |
|---|---|---|---|---|
| Temp. (°C) | 1300 | 1300 | 1300 | 1350 |
| Fluorgehalt (ppm)^{a)} | 12390 | 11860 | 16850 | 14490 |
| Absenkung RI (10-3)^{b)} | -4,8 | -4,6 | -6,5 | -5,6 |
| Δ RI (10⁻³)^{c)} | 0,72 | 0,65 | 0,92 | 1,6 |
| Blasigkeit^{d)} | ++ | ++ | + | - |

a) mittlerer Fluorgehalt, jeweils bezogen auf Gewichtsanteile, bestimmt mittels Elektronenmikrosonde und WDX
b) mittlere Brechungsindexabsenkung, bestimmt mittels Profil-Messgerät der Firma Photon Kinetics.
c) Δ RI = RI_max - RI_min
d) Die Blasigkeit wurde durch visuelle Einschätzung mittels Vergleichsmustern bestimmt.

Als Ausgang wurde ein SiO₂-Sootkörper mit einer Masse von 150 kg und einer Wandstärke von 140 mm (von Innen- bis Außenoberfläche) gewählt. Das Trocknen des Sootkörpers, die Fluorierung, das Vorsintern und das chemische Trocknen erfolgten in einem Dotierofen. Das Sintern wurde unter vermindertem Druck (< 1 mbar) in einem Zonensinterofen durchgeführt.

Wie sich den Beispielen entnehmen lässt, kann mit Hilfe des erfindungsgemäßen Verfahrens die Blasigkeit des Quarzglases deutlich herabgesetzt werden, was sich wiederum positiv auf die optischen Eigenschaften des Quarzglases auswirkt, da es dadurch deutlich weniger Störstellen aufweist.

Weiterhin kann der radiale Brechzahlgradient, der ein Maß für die radiale Homogenität der Brechzahlverteilung ist, verringert werden. Durch den auf die Fluorierung folgende Chlorierungsschritt kann die radiale Homogenität weiter verbessert werden. Dieser führt weiterhin zu eines Prozess-Stabilisierung, da ein erneuter OH-Einbau, insbesondere beim Umsetzten des Körpers von einer Prozesskammer in die andere verhindert wird. Auf diese Weise lassen sich Quarzglaskörper herstellen, die einen OH-Gehalt von unter 0,1 ppm aufweisen.

## Patentansprüche

1. Verfahren zur Herstellung von dotiertem Quarzglas, umfassend die folgenden Schritte:
a) Bereitstellen eines Sootkörpers, wobei der Sootkörper eine mittlere Dichte in einem Bereich von 18 bis 30%, bezogen auf die relative Dichte von Quarzglas, aufweist;
b) Behandeln des Sootkörpers mit einem Gas umfassend eine fluorhaltige Verbindung in einer Prozesskammer unter Ausbildung eines fluorierten Zwischenproduktes (A),
**gekennzeichnet durch** die folgenden Schritte:
wobei in Schritt b) sich die mittlere Dichte des Zwischenproduktes (A) um maximal 30% erhöht, bezogen auf die mittlere Dichte des Sootkörpers in Schritt a);
c) Erhitzen des fluorierten Zwischenproduktes (A) auf eine Temperatur in einem Bereich von 950 bis 1150 °C unter Ausbildung eines fluorierten Zwischenproduktes (B), wobei die mittlere Dichte des fluorierten Zwischenproduktes (B) maximal 80%, vorzugsweise maximal 60% der relativen Dichte von Quarzglas beträgt; und
d) Verglasen des fluorierten Zwischenproduktes (B) in einer Prozesskammer, wobei der Druck innerhalb der Prozesskammer geringer ist als außerhalb der Prozesskammer, unter Ausbildung des dotierten Quarzglases.

2. Verfahren gemäß Anspruch 1, **dadurch gekennzeichnet, dass** die fluorhaltige Verbindung ausgewählt ist aus der Gruppe bestehend aus F₂, SiF₄, CF₄, C₂F₆, SF₆, C₃F₈, NF₃, ClF₃, BF₃ und Fluor-Chlor-Kohlenstoffe.

3. Verfahren gemäß einem oder beiden der Ansprüche 1 und 2, **dadurch gekennzeichnet, dass** der Anteil der fluorhaltigen Verbindung an dem Gas 15 bis 100 Vol.-%, bevorzugt 60 bis 100 Vol.-%, jeweils bezogen auf das Gesamtvolumen des Gases, beträgt.

4. Verfahren gemäß einem oder mehrerer der Ansprüche 1 bis 3, **dadurch gekennzeichnet, dass** das Behandeln des Sootkörpers in Schritt b) bei einer Temperatur in einem Bereich von 700 bis 1100 °C, erfolgt.

5. Verfahren gemäß einem oder mehrerer der Ansprüche 1 bis 4, **dadurch gekennzeichnet, dass** die Verglasungstemperatur in Schritt d) in einem Bereich von 1200 bis 1500 °C, vorzugsweise 1250 bis 1350 °C, liegt.

6. Verfahren gemäß einem oder mehrerer der Ansprüche 1 bis 5, **dadurch gekennzeichnet, dass** die mittlere Dichte des fluorierten Zwischenproduktes (B) 40 bis 80%, vorzugsweise 50 bis 60%, der relativen Dichte von Quarzglas beträgt.

7. Verfahren gemäß einem oder mehrerer der Ansprüche 1 bis 6, **dadurch gekennzeichnet, dass** der Sootkörper in Schritt a) bei einer Temperatur in einem Bereich von 700 bis 1100 °C thermisch und/oder chemisch getrocknet wird.

8. Verfahren gemäß einem oder mehrerer der Ansprüche 1 bis 7, **dadurch gekennzeichnet, dass** das Verglasen in Schritt d) in einer zweiten Prozesskammer erfolgt, die sich von der ersten Prozesskammer, in der die Schritte b) und c) durchgeführt werden, unterscheidet.

9. Verfahren gemäß Anspruch 8, **dadurch gekennzeichnet, dass** das fluorierte Zwischenprodukt (B) in der zweiten Prozesskammer vor der Verglasung einem weiteren Trocknungsschritt unterzogen wird, wobei das Trocknen bei einer Temperatur in einem Bereich von 700 bis 1200 °C erfolgt.

10. Verfahren gemäß einem oder mehrerer der Ansprüche 1 bis 9, umfassend die folgenden Schritte:
a) Bereitstellen eines Sootkörpers, wobei der Sootkörper eine mittlere Dichte in einem Bereich von 18 bis 30%, bezogen auf die relative Dichte von Quarzglas, aufweist;
a-1) Trocknen des Sootkörpers bei einer Temperatur in einem Bereich von 700 bis 1050 °C;
a-2) Optional chemisches Trocknen des Sootkörpers bei einer Temperatur in einem Bereich von 700 bis 1050 °C in Gegenwart eines chlorhaltigen Gases;
b) Behandeln des Sootkörpers mit einem Gas umfassend eine fluorhaltige Verbindung in einer ersten Prozesskammer unter Ausbildung eines fluorierten Zwischenproduktes (A), wobei sich die mittlere Dichte des Zwischenproduktes (A) um maximal 30% erhöht, bezogen auf die mittlere Dichte des Sootkörpers in Schritt a);
c) Erhitzen des fluorierten Zwischenproduktes (A) auf eine Temperatur in einem Bereich von 950 bis 1150 °C unter Ausbildung eines fluorierten Zwischenproduktes (B), wobei die mittlere Dichte des fluorierten Zwischenproduktes (B) maximal 80%, vorzugsweise maximal 60% der relativen Dichte von Quarzglas beträgt;
c-1) Optional chemisches Trocknen des fluorierten Zwischenproduktes (B) bei einer Temperatur in einem Bereich von 700 bis 1100 °C in Gegenwart eines chlorhaltigen Gases;
c-2) Umsetzen des fluorierten Zwischenproduktes (B) in eine zweite Prozesskammer;
c-3) Optional erhitzen des fluorierten Zwischenproduktes (B) auf eine Temperatur oberhalb von 1000 °C, vorzugsweise 1000 °C bis 1200 °C,_wobei der Druck innerhalb der Prozesskammer vorzugsweise geringer ist als außerhalb der Prozesskammer;
d) Verglasen des fluorierten Zwischenproduktes (B) in der zweiten Prozesskammer, wobei der Druck innerhalb der Prozesskammer geringer ist als außerhalb der Prozesskammer, unter Ausbildung des dotierten Quarzglases.

11. Verfahren gemäß einem oder mehrerer der Ansprüche 1 bis 10, **dadurch gekennzeichnet, dass** es sich bei der zweiten Prozesskammer um einen Verglasungsofen, vorzugsweise um einen Zonensinterofen, handelt.

## Claims

1. Method for the manufacture of doped quartz glass, comprising the following steps of:
a. providing a soot body, whereby the soot body has a mean density in the range of 18 to 30%, based on the relative density of quartz glass;
b. treating the soot body with a gas comprising a fluorine-containing compound in a process chamber while forming a fluorinated intermediate product (A);
**characterised by** the following steps of:
whereby the mean density of intermediary product (A) increases by maximally 30% in step b), based on the mean density of the soot body in step a);
c. heating fluorinated intermediate product (A) to a temperature in the range of 950 to 1,150 °C while forming a fluorinated intermediate product (B), whereby the mean density of fluorinated intermediate product (B) is maximally 80%, preferably maximally 60%, of the relative density of quartz glass; and
d. vitrifying fluorinated intermediate product (B) in a process chamber, whereby the pressure inside said process chamber is lower than the pressure outside the process chamber, while forming the doped quartz glass.

2. Method according to claim 1, **characterised in that** the fluorine-containing compound is selected from the group consisting of F₂, SiF₄, CF₄, C₂F₆, SF₆, C₃F₈, NF₃, ClF₃, BF₃ and chlorofluorocarbons.

3. Method according to any one or both of claims 1 and 2, **characterised in that** the fraction of fluorine-containing compound in the gas is 15 to 100 vol.%, more preferably 60 to 100 vol.%, each based on the total volume of the gas.

4. Method according to any one or more of the claims 1 to 3, **characterised in that** the treatment of the soot body in step b) takes place at a temperature in the range of 700 to 1,100 °C.

5. Method according to any one or more of the claims 1 to 4, **characterised in that** the vitrification temperature in step d) is in the range of 1,200 to 1,500 °C, preferably 1,250 to 1,350 °C.

6. Method according to any one or more of the claims 1 to 5, **characterised in that** the mean density of fluorinated intermediate product (B) is 40 to 80%, preferably 50 to 60%, of the relative density of quartz glass.

7. Method according to any one or more of the claims 1 to 6, **characterised in that** the soot body is dried in step a) at a temperature in the range of 700 to 1,100 °C by thermal and/or chemical means.

8. Method according to any one or more of the claims 1 to 7, **characterised in that** the vitrification in step d) takes place in a second process chamber that differs from the first process chamber, in which steps b) and c) are performed.

9. Method according to claim 8, **characterised in that** fluorinated intermediate product (B) is subjected to another drying step in the second process chamber before vitrification, whereby the drying takes place at a temperature in the range of 700 to 1,200 °C.

10. Method according to any one or more of the claims 1 to 9, comprising the following steps of:
a) providing a soot body, whereby the soot body has a mean density in the range of 18 to 30%, based on the relative density of quartz glass;
a-1) drying the soot body at a temperature in the range of 700 to 1,050 °C;
a-2) as an option, chemically drying the soot body at a temperature in the range of 700 to 1,050 °C in the presence of a chlorine-containing gas;
b) treating the soot body with a gas comprising a fluorine-containing compound in a first process chamber while forming a fluorinated intermediate product (A), whereby the mean density of intermediate product (A) increases by maximally 30%, based on the mean density of the soot body in step a);
c) heating fluorinated intermediate product (A) to a temperature in the range of 950 to 1,150 °C while forming a fluorinated intermediate product (B), whereby the mean density of fluorinated intermediate product (B) is maximally 80%, preferably maximally 60%, of the relative density of quartz glass;
c-1) as an option, chemically drying fluorinated intermediate product (B) at a temperature in the range of 700 to 1,100 °C in the presence of a chlorine-containing gas;
c-2) transferring fluorinated intermediate product (B) into a second process chamber;
c-3) as an option, heating fluorinated intermediate product (B) to a temperature above 1,000 °C, preferably 1,000 to 1,200 °C, whereby the pressure inside the process chamber preferably is lower than the pressure outside the process chamber;
d) vitrifying fluorinated intermediate product (B) in the second process chamber, whereby the pressure inside said process chamber is lower than the pressure outside the process chamber, while forming the doped quartz glass.

11. Method according to one or more of the claims 1 to 10, **characterised in that** the second process chamber is a vitrification furnace, preferably a multi-chamber sintering furnace.

## Revendications

1. Procédé de fabrication de verre de quartz dopé comprenant les étapes suivantes :
a) mise à disposition d'un corps de suie, dans lequel le corps de suie présente une densité moyenne dans une plage de 18 à 30 % par rapport à la densité relative du verre de quartz ;
b) traitement du corps de suie avec un gaz comprenant un composé contenant du fluor dans une chambre de processus en formant un produit intermédiaire fluoré (A),
**caractérisé par** les étapes suivantes :
dans lequel la densité moyenne du produit intermédiaire (A) augmente de 30 % maximum à l'étape b) par rapport à la densité moyenne du corps de suie à l'étape a) ;
c) chauffage du produit intermédiaire fluoré (A) à une température dans une plage de 950 à 1150°C en formant un produit intermédiaire fluoré (B), dans lequel la densité moyenne du produit intermédiaire fluoré (B) se monte à 80 % maximum, de préférence 60 % maximum, de la densité relative du verre de quartz ; et
d) vitrification du produit intermédiaire fluoré (B) dans une chambre de processus, dans lequel la pression au sein de la chambre de processus est inférieure à en dehors de la chambre de processus, en formant le verre de quartz dopé.

2. Procédé selon la revendication 1, **caractérisé en ce que** le composé contenant du fluor est sélectionné parmi le groupe constitué de F₂, SiF₄, CF₄, C₂F₆, SF₆, C₃F₈, NF₃, ClF₃, BF₃ et des chlorofluorocarbures.

3. Procédé selon une des revendications 1 et 2 ou les deux, **caractérisé en ce que** la proportion du composé contenant du fluor en gaz se monte à 15 à 100 % en vol., de préférence 60 à 100 % en vol., à chaque fois par rapport au volume total du gaz.

4. Procédé selon une ou plusieurs des revendications 1 à 3, **caractérisé en ce que** le traitement du corps de suie à l'étape b) s'effectue à une température dans une plage de 700 à 1100°C.

5. Procédé selon une ou plusieurs des revendications 1 à 4, **caractérisé en ce que** la température de vitrification à l'étape d) se situe dans une plage de 1200 à 1500°C, de préférence 1250 à 1350°C.

6. Procédé selon une ou plusieurs des revendications 1 à 5, **caractérisé en ce que** la densité moyenne du produit intermédiaire fluoré (B) se monte à 40 à 80 %, de préférence 50 à 60 %, de la densité relative du verre de quartz.

7. Procédé selon une ou plusieurs des revendications 1 à 6, **caractérisé en ce que** le corps de suie à l'étape a) est séché par voie thermique et/ou chimique à une température dans une plage de 700 à 1100°C.

8. Procédé selon une ou plusieurs des revendications 1 à 7, **caractérisé en ce que** la vitrification à l'étape d) s'effectue dans une seconde chambre de processus qui se différencie de la première chambre de processus dans laquelle les étapes b) et c) sont réalisées.

9. Procédé selon la revendication 8, **caractérisé en ce que** le produit intermédiaire fluoré (B) est soumis à une autre étape de séchage dans la seconde chambre de processus avant la vitrification, dans lequel le séchage s'effectue à une température dans une plage de 700 à 1200°C.

10. Procédé selon une ou plusieurs des revendications 1 à 9, comprenant les étapes suivantes :
a) mise à disposition d'un corps de suie, dans lequel le corps de suie présente une densité moyenne dans une plage de 18 à 30 % par rapport à la densité relative du verre de quartz ;
a-1) séchage du corps de suie à une température dans une plage de 700 à 1050°C ;
a-2) séchage chimique optionnel du corps de suie à une température dans une plage de 700 à 1050°C en présence d'un gaz contenant du chlore ;
b) traitement du corps de suie avec un gaz comprenant un composé contenant du fluor dans une première chambre de processus en formant un produit intermédiaire fluoré (A), dans lequel la densité moyenne du produit intermédiaire (A) augmente de 30 % maximum par rapport à la densité moyenne du corps de suie à l'étape a) ;
c) chauffage du produit intermédiaire fluoré (A) à une température dans une plage de 950 à 1150°C en formant un produit intermédiaire fluoré (B), dans lequel la densité moyenne du produit intermédiaire fluoré (B) se monte à 80 % maximum, de préférence 60 % maximum, de la densité relative du verre de quartz ;
c-1) séchage chimique optionnel du produit intermédiaire fluoré (B) à une température dans une plage de 700 à 1100°C en présence d'un gaz contenant du chlore ;
c-2) transformation du produit intermédiaire fluoré (B) dans une seconde chambre de processus ;
c-3) chauffage optionnel du produit intermédiaire fluoré (B) à une température au-dessus de 1000°C, de préférence 1000°C à 1200°C, dans lequel la pression au sein de la chambre de processus est de préférence inférieure à en dehors de la chambre de processus ;
d) vitrification du produit intermédiaire fluoré (B) dans la seconde chambre de processus, dans lequel la pression au sein de la chambre de processus est inférieure à en dehors de la chambre de processus, en formant le verre de quartz dopé.

11. Procédé selon une ou plusieurs des revendications 1 à 10, **caractérisé en ce qu'**il s'agit pour la seconde chambre de processus d'un four de vitrification, de préférence d'un four de frittage par zones.
